# EUROPEAN PATENT APPLICATION

(11) **EP 4 221 068 A1**
(43) Date of publication of application: **02.08.2023**
(21) Application number: 22154325.9
(22) Date of filing: 31.01.2022
(51) Int. Cl.: H04L 9/00

(54) **SYSTEM AND METHOD FOR WRITING AND RETRIEVAL OF DATA IN BLOCKCHAIN**

(71) Applicant: Siemens Aktiengesellschaft, 80333 München (DE)
(72) Inventor: SINGH, Saurabh Narayan, 81739 München (DE); RAJ, Arun, 635110 Hosur, Tamil Nadu (IN)
(74) Representative: Horn Kleimann Waitzhofer Patentanwälte PartG mbB

(57) **Abstract**

A system (100) and a method (200) for writing and retrieval of data in a blockchain (102) with a plurality of nodes (102a, 102b, ..., 102n) adapted to manage multiple assets (110a, 110b, ..., 110x). The method comprises identifying nodes that are offline and determining by the nodes itself whether it is online or offline, at a current instant; storing, by the nodes that are offline, corresponding transaction data related to managed assets, locally therein; determining if any of the offline nodes at a previous instant is back online at the current instant; receiving transaction data from such nodes that are back online; and recording the received transaction data to a current block in the blockchain (102), if there has been no transaction data for the said asset recorded in any of the blocks committed between the said node was last identified to be offline and the current instant.

## Description

The present disclosure generally relates to a blockchain framework, and more particularly to a system and a method for writing and retrieval of data in a blockchain which allows addition of data even if a node is offline for certain time.

Blockchain is a chronological database as it records data in form of chained or ordered blocks and each block corresponds to the data or transactions in a specific logical or real time epoch. Compared to its inception and use cases in the public domain, blockchain now is being used for a variety of applications in the industrial domain like supply chain, Internet-of-Things (IoT) environment, etc. Blockchain technology and IoT are considered a natural fit for each other. Blockchain allows storing of data in a time mapped, immutable manner. IoT devices have many advantages in using blockchain as a base technology for communication, data storage and computation. This also unlocks many new use cases like data sharing, pay per use, maintenance, and predictive analysis. Although this is a challenge, the current design of blockchain requires all the nodes to have an "always" active connection to internet, so that the transactions created can be added to blocks at instants of commitment in the blockchain. Edge and IoT devices must consider potential network issues in design because it might be possible that they do not have a stable network connection. Here blockchain applications have a strong barrier to overcome.

In current blockchains, public and private alike, a node that is disconnected from the network is essentially "left behind". Once the node comes up online, all the transactions it might have committed during the time are discarded, and the node "catches up" with the current state of the blockchain by downloading all the new blocks. There is a bigger challenge here as well. If a client or an application is connected to a specific node of the network, and that node gets disconnected from the network, then for that specific application, all the transactions will initially be committed. This happens because once a node disconnects, it essentially turns into a single node blockchain and all the transactions become valid if this node approves them. But when the node joins the network back again, unbeknownst to the application that was interacting with the node, all the transactions done in the time between disconnection and connection are cancelled or reverted. This is a huge challenge to program for, especially in cases with time sensitive data and transactions (like in IoT environment).

That said, it may be understood that the cancellation of transactions which were created during the period when a node was disconnected from the network is in fact a feature used to handle one of the edge cases of double spending problem. So, this problem or challenge is a known risk present by design in the blockchain frameworks. There are some architectural solutions which can be used to solve it to some extent, but they do not completely solve the problem.

In light of the above, it is an object of the present disclosure to provide a blockchain framework which allows addition of data even if a node is offline for certain time.

The object of the present disclosure is achieved by a method for writing and retrieval of data in a blockchain with a plurality of nodes adapted to manage multiple assets. The method comprises designating one of the plurality of nodes at current instant of committing of the block to the blockchain, as a current leader node. The method further comprises broadcasting a message by the current leader node to each of the other of the plurality of nodes at the said current instant. The method further comprises receiving responses by the current leader node from one or more of the other of the plurality of nodes in response to the broadcasted message. The method further comprises identifying, by the current leader node, nodes from the other of the plurality of nodes that are offline at the said current instant based on the received responses thereby. The method further comprises determining by each of the other of the plurality of nodes a current status thereof being one of online and offline, based on receipt and non-receipt, respectively, of the broadcasted message thereby at the said current instant. The method further comprises storing, by each of the nodes that have determined the current status thereof being offline, corresponding transaction data related to one or more assets managed thereby, locally therein. The method further comprises determining, by the current leader node, if any of the nodes that were identified to be offline at a previous instant when a block was committed to the blockchain is back online at the current instant based on the received responses to currently broadcasted message thereby. The method further comprises receiving transaction data from each of the nodes that have been determined to be back online. The method further comprises recording the received transaction data to a current block being committed to the blockchain, if there has been no transaction data for the said one or more assets recorded in any of the blocks committed to the blockchain between an instant when the corresponding node was last identified to be offline and the current instant

Existing blockchain technologies expect nodes to be always online and discard the transactions when an offline node comes up online. This is based on the rule of "longest chain" where the longest chain is considered the main chain. The proposed invention improves upon this by allowing asset specific and use case specific transactions to be potentially added to the main chain.

In one or more embodiments, the method further comprises re-executing one or more transactions in the received transaction data to generate new transaction data related to the said one or more assets, if there has been transaction data for the said one or more assets recorded in any of the blocks committed to the blockchain between the instant when the corresponding node was last identified to be offline and the current instant; and recording the generated new transaction data to the current block being committed to the blockchain.

In one or more embodiments, the method further comprises assigning a unique asset identification (ID) to each of the one or more assets.

In one or more embodiments, the transaction data has metadata associated therewith. Herein, the metadata comprises the unique asset ID for respective one of the one or more assets for which there is at least one corresponding transaction in the associated transaction data, one or more pointers, with each of the one or more pointers referring to a previous block which contains last transaction related to the respective one of the one or more assets, and a first timestamp corresponding to instant when the associated transaction data was stored.

In one or more embodiments, the metadata further comprises a second timestamp corresponding to instant when the associated transaction data was recorded in a block committed to the blockchain.

In one or more embodiments, the retrieval of data from the blockchain is independent for each of the said one or more assets and is based on the first timestamps of the transaction data related thereto.

In one or more embodiments, each of the plurality of nodes is adapted to manage one or more of the multiple assets.

In one or more embodiments, the current leader node is designated randomly or pseudo-randomly from nodes that are online at current instant, from the plurality of nodes.

In one or more embodiments, the nodes that have determined the current status thereof being offline and are part of a same network partition, store corresponding transaction data related to one or more assets managed thereby, locally in a side chain.

The object of the present disclosure is also achieved by a system for writing and retrieval of data in a blockchain with a plurality of nodes adapted to manage multiple assets and to commit blocks therein. The system comprises one or more processing units, and a memory communicatively coupled to the one or more processing units, the memory comprising a module stored in the form of machine-readable instructions executable by the one or more processing units, wherein the module is configured to perform the method steps described above.

The object of the present disclosure is further achieved by a computer-program product, having computer-readable instructions stored therein, that when executed by a processing unit, cause the processing unit to perform the method steps described above.

The object of the present disclosure is further achieved by a computer readable medium on which program code sections of a computer program are saved, the program code sections being loadable into and/or executable in a system to make the system execute the method steps described above when the program code sections are executed in the system.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

As used herein, the term "blockchain," "blockchain framework" or "blockchain network" may refer to a decentralized network that includes the plurality of nodes. In an example, the blockchain network is a consortium blockchain network. Such plurality of nodes may, for example, perform transactions in the blockchain network.

As used herein, the term "computing device" may refer to be a physical, a virtual device or a computer-program product. In many implementations, the computing device may be any device capable of performing operations, such as a dedicated processor, a portion of a processor, a virtual processor, a portion of a virtual processor, portion of a virtual device, or a virtual device. The system of the present disclosure may include or be embodied in the computing device. In some implementations, the computing device may execute an application for writing and retrieval of data in a blockchain.

As used herein, the term "network" may refer to a communication framework utilized for communication of the blockchain network, the computing device and the ledger. Further, the term "network topology" may refer to physical and/or logical arrangement of network nodes in the network.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention:
FIG 1 is a schematic diagram representation of a system implementing a blockchain, in accordance with one or more embodiments of the present disclosure;
FIG 2 is a flowchart representation of a method listing steps involved in writing and retrieval of data in a blockchain with a plurality of nodes adapted to manage multiple assets, in accordance with one or more embodiments of the present disclosure; and
FIG 3 is an exemplary implementation of the blockchain for writing and retrieval of data therein, in accordance with one or more embodiments of the present disclosure.

Examples of a method, a system, a computer-program product and a computer readable medium for writing and retrieval of data in a blockchain are disclosed herein. Various embodiments are described with reference to the drawings, wherein like reference numerals are used to refer to like elements throughout. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Unless specified otherwise in the following description, the terms "perform", "calculate", "computer-assisted", "compute", "establish", "generate", "configure", "reconstruct", and the like preferably relate to operations and/or processes and/or processing steps that change and/or generate data and/or convert the data into other data, wherein the data may be represented or be present in particular in the form of physical variables, for example in the form of electrical impulses. The expression "computer" should in particular be interpreted as broadly as possible in order in particular to cover all electronic devices having data processing properties. Computers may thus for example be personal computers, servers, programmable logic controllers (PLCs), hand-held computer systems, pocket PC devices, mobile radio devices and other communication devices able to process data in a computer-assisted manner, processors and other electronic data processing devices.

Moreover, in particular a (relevant) person skilled in the art, with knowledge of the method claim/method claims, is of course aware of all routine possibilities for realizing products or possibilities for implementation in the prior art, and so there is no need in particular for independent disclosure in the description. In particular, these customary realization variants known to the person skilled in the art can be realized exclusively by hardware (components) or exclusively by software (components). Alternatively and/or additionally, the person skilled in the art, within the scope of his/her expert ability, can choose to the greatest possible extent arbitrary combinations according to embodiments of the invention for hardware (components) and software (components) in order to implement realization variants according to embodiments of the invention.

A combination according to embodiments of the invention for hardware (components) and software (components) can occur in particular if one portion of the effects according to embodiments of the invention is brought about exclusively by special hardware (e.g., a processor in the form of an ASIC or FPGA) and/or another portion by the (processor- and/or memory-aided) software.

In particular, in view of the high number of different realization possibilities, it is impossible and also not helpful or necessary for the understanding of embodiments of the invention to name all these realization possibilities. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can also serve as features for another exemplary embodiment, in particular without this having to be explicitly stated in the respective exemplary embodiment.

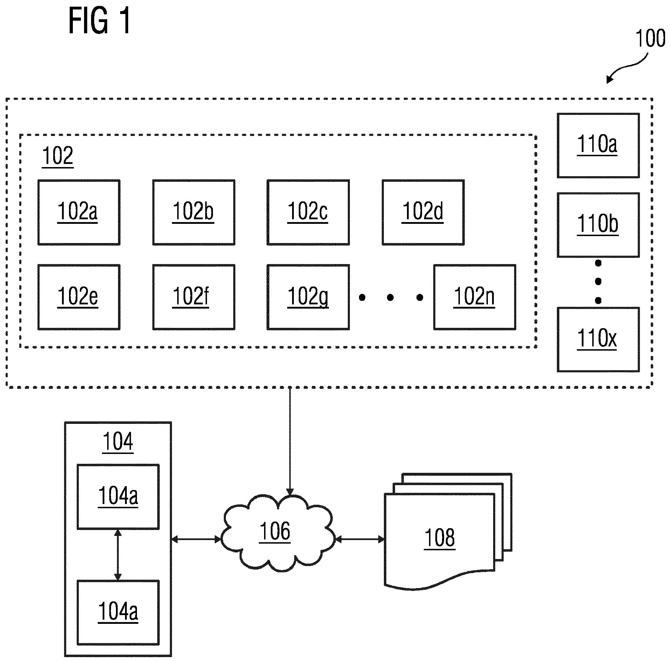

FIG 1 shows an exemplary embodiment of the present disclosure as a schematic diagram of a system 100 implemented for writing and retrieval of data in a blockchain 102 with a plurality of nodes 102a, 102b, ..., 102n adapted to manage multiple assets 110a, 110b, ..., 110x. In present implementation, the system 100 may reside on or may be executed by one or more computing devices 104, which may be connected to a network (e.g., the internet or a local area network), such as a network 106. The system 100 further includes a ledger 108 (such as a database). The blockchain 102, the computing devices 104 and the ledger 108 are communicatively coupled via the network 106.

As illustrated in FIG 1, the system 100 includes the blockchain 102. The blockchain 102 includes a plurality of nodes, such as nodes 102a, 102b, ..., 102n. Specifically, the blockchain 102 is a decentralized network that includes the plurality of nodes 102a, 102b, ..., 102n. In an example, the blockchain 102 is a consortium blockchain 102. Within the context of embodiments of the present disclosure, a "blockchain node", "node", "node of a blockchain" and the like can be understood to mean for example devices (e.g., field devices), computers, clients or subscribers that perform operations with a blockchain, such as the blockchain 102.

In the illustration of FIG 1, one computing device 104 has been shown. Also, as shown, the computing device 104 may include one or more processing units 104a and a memory 104b communicatively coupled to the one or more processing units 104a. Examples of computing devices 104 may include, but are not limited to, a personal computer(s), a laptop computer(s), mobile computing device(s), a server computer, a series of server computers, a mainframe computer(s), or a computing cloud(s). In general, the "computing device" in connection with embodiments of the present may be understood to mean for example a computer (system), a client, a smartphone, a device or a server that are in each case arranged outside the blockchain or are not participants in the distributed database (for example the blockchain) (that is to say do not perform operations with the distributed database or only query it without however performing transactions, inserting data blocks or calculating proof of work).

In certain implementations, the computing device 104 may be a physical or virtual device. In many implementations, the computing device 104 may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic.

In an example, the computing device 104 may be a computer-program product programmed for performing the said purpose. In another example, the computing device 104 may be a computer readable medium on which program code sections of a computer program are saved, the program code sections being loadable into and/or executable in a system to make the system execute the steps for performing the said purpose. The computing device 104 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device 104 can be implemented in a single chip. The system of the present disclosure as discussed in the preceding paragraphs may include or be embodied in the computing device 104. It may be appreciated that the two systems and (and the corresponding components/elements) may be equivalent for the purposes of the present disclosure.

In one embodiment, the computing device 104 includes a communication mechanism such as a bus for passing information among the components of the computing device 104. As discussed, the computing device 104 includes the one or more processing units 104a and the memory 104b. Generally, the memory 104b is communicatively coupled to the one or more processing units 104a. Hereinafter, the one or more processing units 104a are sometimes simply referred to as processor. Herein, in particular, the processor 104a has connectivity to the bus to execute instructions and process information stored in the memory. The processor 104a may include one or more processing cores with each core configured to perform independently. A multi-core processor enables multiprocessing within a single physical package. Examples of a multi-core processor include two, four, eight, or greater numbers of processing cores. Alternatively, or in addition, the processor 104a may include one or more microprocessors configured in tandem via the bus to enable independent execution of instructions, pipelining, and multithreading. The processor 104a may also be accompanied with one or more specialized components to perform certain processing functions and tasks such as one or more digital signal processors (DSP), or one or more application-specific integrated circuits (ASIC). A DSP typically is configured to process real-world signals (e.g., sound) in real time independently of the processor. Similarly, an ASIC can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

As used herein, the term "processor" refers to a computational element that is operable to respond to and processes instructions that drive the system. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system.

The processor 104a and accompanying components have connectivity to the memory 104b via a bus (not shown). The memory 104b includes both dynamic memory (e.g., RAM, magnetic disk, writable optical disk, etc.) and static memory (e.g., ROM, CD-ROM, etc.) for storing executable instructions that when executed perform the method steps described herein for writing and retrieval of data in the blockchain 102. In particular, the memory 104b includes a module arrangement to perform steps for writing and retrieval of data in the blockchain 102. The memory 104b also stores the data associated with or generated by the execution of the inventive steps.

Herein, the memory 104b may be volatile memory and/or non-volatile memory. The memory 104b may be coupled for communication with the processing unit. The processing unit 104a may execute instructions and/or code stored in the memory 104b. A variety of computer-readable storage media may be stored in and accessed from the memory 104b. The memory 104b may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In some implementations, the instruction sets and subroutines of the system 100, which may be stored on storage device, such as storage device coupled to computer, may be executed by one or more processors 104a. In some implementations, one or more of storage devices may include but are not limited to: hard disk drives; flash drives, tape drives; optical drives; RAID arrays; random access memories (RAM); and read-only memories (ROM). Examples of user devices (and/or computer) may include, but are not limited to, a personal computer, a laptop computer, a smart/data-enabled, cellular phone, a notebook computer, a tablet, a server, a television, a smart television, a media capturing device, and a dedicated network device.

In some implementations, the computing device 104 may include a data store, such as a database (e.g., relational database, object-oriented database, triplestore database, etc.) and may be located within any suitable memory location, such as storage device coupled to computer. In some implementations, data, metadata, information, etc. described throughout the present disclosure may be stored in the data store. In some implementations, computer may utilize any known database management system such as, but not limited to, DB2, in order to provide multi-user access to one or more databases, such as the above noted relational database. In some implementations, the data store may also be a custom database, such as, for example, a flat file database or an XML database. In some implementations, any other form(s) of a data storage structure and/or organization may also be used. In some implementations, the system 100 may be a component of the data store, a standalone application that interfaces with the above noted data store and/or an applet / application that is accessed via client applications. In some implementations, the above noted data store may be, in whole or in part, distributed in a cloud computing topology. In this way, computer and storage device may refer to multiple devices, which may also be distributed throughout the network 106.

In some implementations, the computing device 104 may execute an application for writing and retrieval of data in the blockchain 102 with the plurality of nodes 102a, 102b, ..., 102n adapted to manage multiple assets 110a, 110b, ..., 110x, as described later in detail in the description. In some implementations, the system 100 and/or application may be accessed via one or more of client applications. In some implementations, the system 100 may be a standalone application, or may be an applet / application / script / extension that may interact with and/or be executed within application a component of application and/or one or more of client applications. In some implementations, application may be a standalone application, or may be an applet / application / script / extension that may interact with and/or be executed within the system 100, a component of the system 100, and/or one or more of client applications. In some implementations, one or more of client applications may be a standalone application, or may be an applet / application / script / extension that may interact with and/or be executed within and/or be a component of the system 100 and/or application. Examples of client applications may include, but are not limited to, a standard and/or mobile web browser, an email application (e.g., an email client application), a textual and/or a graphical user interface, a customized web browser, a plugin, an Application Programming Interface (API), or a custom application. The instruction sets and subroutines of client applications which may be stored on storage devices coupled to user devices may be executed by one or more processors and one or more memory architectures incorporated into user devices.

In some implementations, one or more of client applications may be configured to effectuate some or all of the functionality of the system 100 (and vice versa). Accordingly, in some implementations, the system 100 may be a purely server-side application, a purely client-side application, or a hybrid server-side / client-side application that is cooperatively executed by one or more of client applications and/or the system 100.

In some implementations, one or more of client applications may be configured to effectuate some or all of the functionality of application (and vice versa). Accordingly, in some implementations, application may be a purely server-side application, a purely client-side application, or a hybrid server-side / client-side application that is cooperatively executed by one or more of client applications and/or application. As one or more of client applications the system 100, and application taken singly or in any combination, may effectuate some or all of the same functionality, any description of effectuating such functionality via one or more of client applications the system 100, application or combination thereof, and any described interaction(s) between one or more of client applications the system 100, application or combination thereof to effectuate such functionality, should be taken as an example only and not to limit the scope of the disclosure.

In some implementations, one or more of users may access the system 100 (e.g., using one or more of user devices) directly through the network 106. In some implementations, the network 106 may be connected to one or more secondary networks, examples of which may include but are not limited to: a local area network; a wide area network; or an intranet, for example. In some implementations, the computing device 104 may be connected to the network 106 through secondary network with phantom link line.

In some implementations, the various user devices may be directly or indirectly coupled to the network 106. For example, user device may be directly coupled to the network 106 via a hardwired network connection. Alternatively, user device may be wirelessly coupled to the network 106 via wireless communication channel established between user device and wireless access point (i.e., WAP) which in turn may be directly coupled to the network 106. WAP may be, for example, an IEEE 802.11a, 802.11b, 802.11g, 802.11ac, 802.11ae, Wi-Fi^{®}, RFID, and/or Bluetooth^{™} (including Bluetooth^{™} Low Energy) device that is capable of establishing wireless communication channel between user device and WAP. In other examples, user device may be wirelessly coupled to the network 106 via wireless communication channel established between user device and cellular network / bridge which may be directly coupled to the network 106. User devices may execute an operating system, examples of which may include but are not limited to, Android^{®}, Apple^{®} iOS^{®}, Mac^{®} OS X^{®}; Red Hat^{®} Linux^{®}, or a custom operating system.

In some implementations, some or all of the IEEE 802.11x specifications may use Ethernet protocol and carrier sense multiple access with collision avoidance (i.e., CSMA/CA) for path sharing. The various 802.11x specifications may use phase-shift keying (i.e., PSK) modulation or complementary code keying (i.e., CCK) modulation, for example, Bluetooth^{™} (including Bluetooth^{™} Low Energy) is a telecommunications industry specification that allows, e.g., mobile phones, computers, smart phones, and other electronic devices to be interconnected using a short-range wireless connection. Other forms of interconnection (e.g., Near Field Communication (NFC)) may also be used.

It is to be understood that the system and computer-assisted method described herein may be implemented in various forms of hardware, software, firmware, special purpose processors, or a combination thereof. "Computer-assisted" in connection with embodiments of the present disclosure may be understood to mean for example an implementation of the method in which in particular a processor executes at least one method step of the method. One or more of the present embodiments may take a form of a computer program product comprising program modules accessible from computer-usable or computer-readable medium storing program code for use by or in connection with one or more computers, processors, or instruction execution system. A "module" in connection with embodiments of the invention may be understood to mean for example a processor and/or a storage unit for storing program commands. By way of example, the processor is specifically configured so as to execute the program commands such that the processor executes functions in order to implement or perform the method according to embodiments of the invention or a step of the method according to embodiments of the invention. For the purpose of this description, a computer-usable or computer-readable medium can be any apparatus that can contain, store, communicate, propagate, or transport the program for use by or in connection with the instruction execution system, apparatus, or device.

As described herein, the module in the memory 104b of the computing device 104 is configured to perform the operations of a method (as described later) for writing and retrieval of data in the blockchain 102 with the plurality of nodes 102a, 102b, ..., 102n adapted to manage multiple assets 110a, 110b, ..., 110x. The computing device 104 performs the operations of the method by use of the network 106. Further, the transactions between the one or more nodes of the blockchain 102 are stored in the ledger 108 via the network 106. Details for writing and retrieval of data in the blockchain 102 with the plurality of nodes 102a, 102b, ..., 102n adapted to manage multiple assets 110a, 110b, ..., 110x are explained in detail hereinafter.

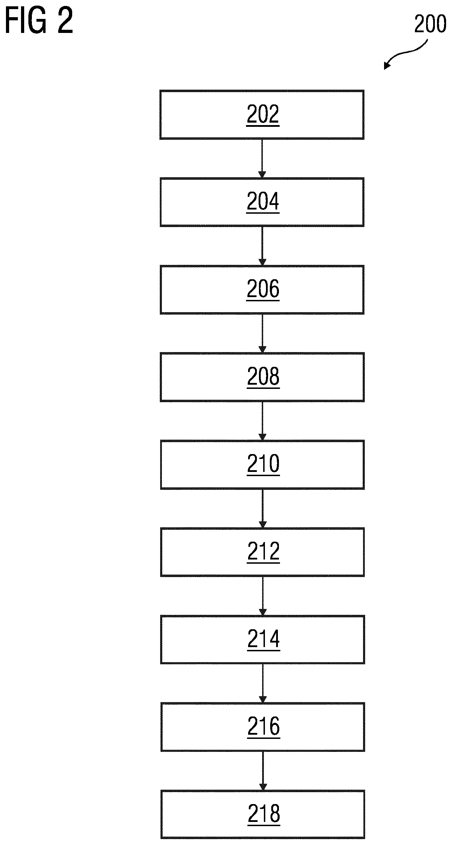

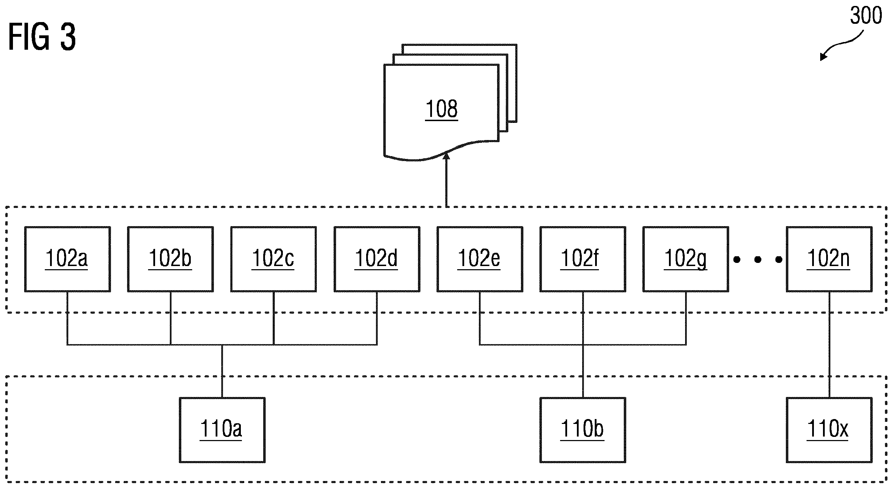

FIG 2 is a flowchart representation of a method 200 listing steps involved for writing and retrieval of data in the blockchain 102 with the plurality of nodes 102a, 102b, ..., 102n adapted to manage multiple assets 110a, 110b, ..., 110x, in accordance with an embodiment of the present disclosure. Hereinafter, the method 200 of FIG 2 is explained in conjunction with elements of FIG 1, and further in reference to FIG 3. Herein, FIG 3 is an exemplary implementation of the blockchain for writing and retrieval of data therein, in accordance with one or more embodiments of the present disclosure.

It may be understood that in the blockchain 102, multiple assets 110a, 110b, ..., 110x from multiple use cases can exist. Further, each block in the blockchain 102 may consist of multiple transactions. In the present embodiments, the method 200 comprises assigning a unique asset identification (ID) to each of the one or more assets 110a, 110b, ..., 110x. Further, in the present embodiments, each of the plurality of nodes 102a, 102b, ..., 102n is adapted to manage one or more of the multiple assets 110a, 110b, ..., 110x. In the illustrated embodiment of FIG 3, illustrated is an exemplary network architecture 300 for implementation of the blockchain 102 for writing and retrieval of data therein. As shown, herein, the asset 110a is being managed by the nodes 102a-102d; the asset 110b is being managed by the nodes 102e-102g; and the asset 110x is being managed by the node 102n. Again, it may be appreciated that such network architecture 300 is exemplary only. In general, there is a many-to-many relation between nodes 102a, 102b, ..., 102n and the assets 110a, 110b, ..., 110x. One node can manage more than one asset and one asset can be managed by more than one node. The present disclosure operates on the asset level and would behave the same, nevertheless.

For the purposes of the present disclosure, each transaction consists of transaction data related to the corresponding asset 110a, 110b, ..., 110x (i.e., state change information). Herein, the transaction data has metadata associated therewith. Such metadata comprises the unique asset ID for respective one of the one or more assets 110a, 110b, ..., 110x for which there is at least one corresponding transaction in the associated transaction data. Further, the metadata comprises one or more pointers, with each of the one or more pointers referring to a previous block which contains last transaction related to the respective one of the one or more assets 110a, 110b, ..., 110x. The metadata may further comprise a first timestamp corresponding to instant when the associated transaction data was stored. That is, the first timestamp (TxProTime) corresponds to the time instant when the transaction was proposed. In some examples, the metadata may further comprise a second timestamp corresponding to instant when the associated transaction data was recorded in a block committed to the blockchain 102. That is, the second timestamp (TxUpTime) corresponds to the time instant when the transaction was finally added to the distributed ledger 108. It may be understood that, in the present disclosure, the instant (time instant) may refer to instants of time when a block may be written (committed) to the blockchain 102.

At step 202, the method 200 includes designating one of the plurality of nodes 102a, 102b, ..., 102n at current instant of committing of the block to the blockchain 102, as a current leader node. As discussed, the blockchain 102 includes a plurality of nodes, like the nodes 102a, 102b, ..., 102n. Herein, the processing unit 104a may be configured to designate one of the nodes 102a, 102b, ..., 102n as the current leader node. By "current leader node" is meant that the selected node is designated as the leader node only for the current instant of committing of the block in the blockchain 102; and for a next instant of committing of the block in the blockchain 102, some other (or even same) node may be designated as the leader node. In general, every time a block is to be added to the blockchain 102, a leader node is randomly chosen from the participating nodes 102a, 102b, ..., 102n. In the present embodiments, the current leader node is designated randomly or pseudo-randomly from nodes that are online at the current instant, from the plurality of nodes 102a, 102b, ..., 102n. Where in the present context, the terms "randomly" and "pseudo-randomly" are used to refer to an arbitrary selection of the leader node from the nodes 102a, 102b, ..., 102n, which may be performed, in some examples, in a reproducible and/or deterministic way. In other embodiments, the current leader node may be designated based on a predefined criterion (or predefined criteria), without departing from the spirit and the scope of the present disclosure.

At step 204, the method 200 includes broadcasting a message by the current leader node to each of the other of the plurality of nodes at the said current instant. That is, the current leader node may broadcast message to all other nodes in the blockchain 102 at the time of writing of block therein. For example, if the node 102a is selected and designated as the current leader node, then the node 102a may broadcast a message to all other nodes, i.e., nodes 102b, 102c, ..., 102n. Herein, the broadcasted message from the current leader node may be in the form of a ping to the said other nodes.

At step 206, the method 200 includes receiving responses by the current leader node from one or more of the other of the plurality of nodes in response to the broadcasted message. That is, the current leader node may receive responses to the broadcasted message from all other nodes in the blockchain 102 (at the time of writing of block therein). As in the above example, if the node 102a is selected and designated as the current leader node, and the node 102a may have broadcast the message to all other nodes, i.e., nodes 102b, 102c, ..., 102n; then the node 102a is further configured to receive acknowledgements of receipt of the broadcasted message thereby from the said other nodes, i.e., nodes 102b, 102c, ..., 102n. Herein, the received responses from the said other nodes may again be in the form of a ping to the current leader node.

At step 208, the method 200 includes identifying, by the current leader node, nodes from the other of the plurality of nodes that are offline at the said current instant based on the received responses thereby. That is, the current leader node may determine based on the received responses to the broadcasted message that which of the said other nodes in the blockchain 102 are online at the corresponding time of writing of block therein. As in the above example, if the node 102a is selected and designated as the current leader node, and the node 102a may have broadcast the message to all other nodes, i.e., nodes 102b, 102c, ..., 102n, and may further have received acknowledgements of receipt of the broadcasted message from at least some of the said other nodes 102b, 102c, ..., 102n; then the node 102a is further configured to determine based on the acknowledgements of receipt of the broadcasted message thereby which of the said other nodes 102b, 102c, ..., 102n are online at the current instant. Herein, the current leader node may confirm any of the other nodes is online if the acknowledgement is received therefrom, and the other nodes from which no acknowledgement is received are considered offline for the current instant of writing of the block in the blockchain 102.

At step 210, the method 200 includes determining by each of the other of the plurality of nodes a current status thereof being one of online and offline, based on receipt and non-receipt, respectively, of the broadcasted message thereby at the said current instant. That is, each of the said other nodes may independently determine the current status thereof based on the receipt or non-receipt of the broadcasted message thereby, i.e., whether that the other node itself is online or offline. As in the above example, if any of the other node, say node 102b may have received the broadcasted message from the current leader node 102a at the current instant, then the said other node 102b may determine its status to be online; and if some other of the other nodes, say node 102c may have not received the broadcasted message from the current leader node 102a at the current instant, then the other node 102c may determine its status to be offline. It may be appreciated by a person skilled in the art that this is possible since each of the nodes 102a, 102b, ..., 102n may have corresponding internal clocks synced with each other and already have information about time of writing of the blocks in the blockchain 102, and thus would be expecting to receive the broadcasted message at the current instant.

At step 212, the method 200 includes storing, by each of the nodes that have determined the current status thereof being offline, corresponding transaction data related to one or more assets managed thereby, locally therein. That is, since the nodes (like the node 102c in the above example) that may have determined their status to be offline would not be able to transmit the transaction data for the corresponding assets 110a, 110b, ..., 110x generated thereby from the time of writing of the last block in the blockchain 102, those nodes may store such transaction data locally therein. By "storing locally" means that those nodes may at least temporarily store data in a local storage medium.

In one or more embodiments, the nodes that have determined the current status thereof being offline and are part of a same network partition, store corresponding transaction data related to one or more assets managed thereby, locally in a side chain. That is, if two or more nodes may have determined their status to be offline at the current instant of writing block to the blockchain 102, and such nodes may be part of the same network partition and thus be able to communicate with each other (since it may be a network access point of the said network partition that may not be able to connect to the internet, but allow for local data communication), then those nodes may locally store corresponding transaction data (as described in the preceding paragraph) in the form of a side chain. Such side chain may have the transaction data from each of the said two or more offline nodes as part of the same network partition.

At step 214, the method 200 includes determining, by the current leader node, if any of the nodes that were identified to be offline at a previous instant when a block was committed to the blockchain 102 is back online at the current instant based on the received responses to currently broadcasted message thereby. That is, the leader node (like the node 102a in the above example) for the current instant may also check if any of the nodes (like the node 102b, 102c, ..., 102n in the above example) that were determined to be offline at a previous instant (by the then leader node) is online now. For this purpose, such information about status of offline nodes may be passed from leader node at one instant to the leader node at the next instant. Thereby, based on the comparison, from the list of offline nodes at previous instant(s) and the currently determine online nodes, the current leader node (i.e., the node 102a in the present example) may determine which of the nodes have come back online at a time period between the previous instant and current instant of writing of block in the blockchain 102.

At step 216, the method 200 includes receiving transaction data from each of the nodes that have been determined to be back online. That is, the leader node may receive the transaction data from the nodes which have been previously offline (as determined as per steps 204-208) and are back online now (as determined as per step 214). Herein, the transaction data is the locally stored data by such previously offline nodes, generated between the instant of time when such node may have first determined itself to be offline and the current instant (when it is back online). As discussed, in case of the multiple nodes from the single network partition being previously offline and locally storing data in the form of the side chain, the transaction data from the blocks of such side chain may be received. Considering the above example, if the node 102c, which was previously determined to be offline and have been storing the transaction data of the corresponding asset 110a (as shown in FIG 3) managed thereby, is now determined to be online, the stored transaction data therein and/or in the corresponding side chain is received.

At step 218, the method 200 includes recording the received transaction data to a current block being committed to the blockchain, if there has been no transaction data for the said one or more assets recorded in any of the blocks committed to the blockchain between an instant when the corresponding node was last identified to be offline and the current instant. As discussed, each of the plurality of nodes 102a, 102b, ..., 102n is adapted to manage one or more of the multiple assets 110a, 110b, ..., 110x. Again, considering the above example, now when the transaction data of the corresponding asset 110a is received from the node 102c (as managed thereby), it is checked if none of the other nodes also managing the asset 110a (i.e., the nodes 102a, 102b and 102d, as shown in example of FIG 3) have added any transaction data related to the asset 110a between the instant when the node 102c went offline to the current instant; and if that is the scenario, the transaction data related to the asset 110a as received from the node 110c at the current instant is added to the block being written to the blockchain 102 at the same current instant.

Considering the above example, the other scenario would be if it is determined upon checking that one or more of the other nodes also managing the asset 110a (i.e., the nodes 102a, 102b and 102d, as shown in example of FIG 3) have added any transaction data related to the asset 110a between the instant when the node 102c went offline to the current instant. In such scenario, in one or more embodiments, the method 200 comprises re-executing one or more transactions in the received transaction data to generate new transaction data related to the said one or more assets, if there has been transaction data for the said one or more assets recorded in any of the blocks committed to the blockchain between the instant when the corresponding node was last identified to be offline and the current instant. Further, the method 200 comprises recording the generated new transaction data to the current block being committed to the blockchain 102. That is, instead of directly writing and committing the received transaction data from the previously offline and now online node (like the node 102c), the entries related to the received transaction data are again executed and the correspondingly generated new transaction data is recorded in the block being committed to the blockchain 102 at the current instant.

As discussed, each transaction consists of transaction data related to the corresponding asset 110a, 110b, ..., 110x (i.e., state change information). Herein, the transaction data has metadata associated therewith. Such metadata comprises the unique asset ID for respective one of the one or more assets 110a, 110b, ..., 110x for which there is at least one corresponding transaction in the associated transaction data. Further, the metadata comprises one or more pointers, with each of the one or more pointers referring to a previous block which contains last transaction related to the respective one of the one or more assets 110a, 110b, ..., 110x. The metadata may further comprise the first timestamp corresponding to instant when the associated transaction data was stored. In the present embodiments, the retrieval of data from the blockchain 102 is independent for each of the said one or more assets 110a, 110b, ..., 110x and is based on the first timestamps of the transaction data related thereto. Considering an example (not illustrated in accompanied drawings), if the asset 110a is managed by nodes 102a, 102b and 102c and the asset 110b is managed by nodes 102a, 102d, 102e; and the node 102a goes offline during which it proposes transactions related to both assets 110a and 110b; then such proposed transactions would be treated separately. Depending on the transactions from the other nodes 102b, 102c, 102d and 102e, it might be possible for transactions related to only the asset 110a, only the asset 110b, or both the asset 110a and the asset 110b, or neither of the asset 110a or the asset 110b to be added to the blockchain 102.

In general, the present method 200 provides that a unique identification is assigned to each asset and identify which nodes or group of nodes are authorized to change and update which assets. For the subset of nodes which can edit the asset, even if they go offline, the transactions are recorded. Unless the asset has changes made by some other nodes of the same subset, when the node comes up, the transactions can be appended to the blockchain 102. Every transaction also has the "proposed time" as a metadata field. When tracking the history of the asset, the information can be linked either based on when the asset related transaction was made in the blockchain or based on the metadata, and thereby the actual time of transaction can be determined. Even if the asset is modified while the node is offline, since other nodes do not change or update this asset or interact with the use case, the asset updates can be later appended to the blockchain.

Now, every time a new transaction is proposed, the blockchain 102 is traversed till the last block with transaction for this asset, and that pointer is added to the transaction metadata. If the transaction has not been initiated from an offline node, the TxProTime and TxUpTime are same. Further, the associated asset ID is added to the metadata, and the corresponding transaction(s) is/are added to the current block being committed to the blockchain 102.

Further, after every block creation, the leader node sends a broadcast message to all nodes and initiates a handshake protocol. Based on responses, offline nodes which might potentially add transactions when they come online are identified. Herein, offline nodes are associated with one or a specific set of assets on the blockchain 102. While a node is offline, for that node, the blockchain 102 turns into a single node blockchain (which is the default blockchain design). Since the node does not receive any broadcast message, it can self-determine that it is not part of the network currently. This could be configured based on number of blocks, or time or size of chain. For example, if a node does not respond for 3 block creations, then it is considered offline. During such time, the node proposes and adds transactions to the local blockchain. For the local blockchain, the chain grows as it would if it was still part of the blockchain 102.

When the node comes online again, or joins the network again, the chain of the offline node is different compared to the chain of the network. The current leader node of the main blockchain 102 identifies that the offline node has joined again based on the broadcast message and responses. At this time, the said previously offline node proposes its new transactions to the main chain. Each transaction is checked based on its asset ID to confirm whether corresponding asset has had other changes. If the asset has not had any other changes since the node went offline, the transactions are added to the new blocks in the blockchain 102. Herein, the transaction's first timestamp (TxProTime) is the time at which the transaction was proposed in the offline node, and the transaction's (TxUpTime) is updated to the time at which the transaction was added to the blockchain 102. Otherwise, if the asset has had state changes since the node went offline, the new state from offline node is discarded, the transactions from the offline node are again performed on the asset, and the new state of asset obtained from the transactions is stored in the blockchain 102.

Now, for traversal of the blockchain 102, the blockchain 102 may be independently traversed for each asset. As discussed, every asset related transaction has two timestamps, the first timestamp (TxProTime) and the second timestamp (TxUpTime). Based on the first time stamp (TxProTime), the actual timeline of the evolution of the asset can be created even if it was added by an offline node.

The proposed blockchain framework allows addition of data even if a node is offline for certain time. Existing blockchain technologies expect nodes to be always online and discard the transactions when an offline node comes up online. This is based on the rule of "longest chain" where the longest chain is considered the main chain. The present disclosure improves upon this by allowing asset specific and use case specific transactions to be potentially added to the main chain. Thus, the system and the method of the present disclosure allows for improved performance of blockchain devices by providing a way to handle erratic network connection, especially for IoT environments by improving fault-tolerance of the blockchain network.

While the present disclosure has been described in detail with reference to certain embodiments, it should be appreciated that the present disclosure is not limited to those embodiments. In view of the present disclosure, many modifications and variations would present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| system | 100 |
| blockchain | 102 |
| nodes | 102a, 102b, ..., 102n |
| computing device | 104 |
| processing unit(s) | 104a |
| memory | 104b |
| network | 106 |
| distributed ledger | 108 |
| assets | 110a, 110b, ..., 110x |
| method | 200 |
| step | 202 |
| step | 204 |
| step | 206 |
| step | 208 |
| step | 210 |
| step | 212 |
| step | 216 |
| step | 218 |
| network architecture | 300 |

## Claims

1. A method (200) for writing and retrieval of data in a blockchain (102) with a plurality of nodes (102a, 102b, ..., 102n) adapted to manage multiple assets (110a, 110b, ..., 110x), the method (200) comprising:
designating one of the plurality of nodes (102a, 102b, ..., 102n) at current instant of committing of the block to the blockchain (102), wherein the designated node is a current leader node;
broadcasting a message by the current leader node to each of the other of the plurality of nodes (102a, 102b, ..., 102n) at the said current instant;
receiving responses by the current leader node from one or more of the other of the plurality of nodes (102a, 102b, ..., 102n) in response to the broadcasted message;
identifying, by the current leader node, nodes from the other of the plurality of nodes (102a, 102b, ..., 102n) that are offline at the said current instant based on the received responses thereby;
determining by each of the other of the plurality of nodes (102a, 102b, ..., 102n) a current status thereof being one of online and offline, based on receipt and non-receipt, respectively, of the broadcasted message thereby at the said current instant;
storing, by each of the nodes that have determined the current status thereof being offline, corresponding transaction data related to one or more assets managed thereby, locally therein;
determining, by the current leader node, if any of the nodes that were identified to be offline at a previous instant when a block was committed to the blockchain (102) is back online at the current instant based on the received responses to currently broadcasted message thereby;
receiving transaction data from each of the nodes that have been determined to be back online; and
recording the received transaction data to a current block being committed to the blockchain (102), if there has been no transaction data for the said one or more assets recorded in any of the blocks committed to the blockchain (102) between an instant when the corresponding node was last identified to be offline and the current instant.

2. The method (200) according to claim 1 further comprising:
re-executing one or more transactions in the received transaction data to generate new transaction data related to the said one or more assets, if there has been transaction data for the said one or more assets recorded in any of the blocks committed to the blockchain (102) between the instant when the corresponding node was last identified to be offline and the current instant;
recording the generated new transaction data to the current block being committed to the blockchain (102).

3. The method (200) according to claim 1 further comprising assigning a unique asset identification (ID) to each of the one or more assets.

4. The method (200) according to claim 3, wherein the transaction data has metadata associated therewith, wherein the metadata comprises:
the unique asset ID for respective one of the one or more assets for which there is at least one corresponding transaction in the associated transaction data,
one or more pointers, with each of the one or more pointers referring to a previous block which contains last transaction related to the respective one of the one or more assets, and
a first timestamp corresponding to instant when the associated transaction data was stored.

5. The method (200) according to claim 4, wherein the metadata further comprises a second timestamp corresponding to instant when the associated transaction data was recorded in a block committed to the blockchain (102).

6. The method (200) according to claim 4, wherein the retrieval of data from the blockchain (102) is independent for each of the said one or more assets and is based on the first timestamps of the transaction data related thereto.

7. The method (200) according to claim 1, wherein each of the plurality of nodes (102a, 102b, ..., 102n) is adapted to manage one or more of the multiple assets (110a, 110b, ..., 110x).

8. The method (200) according to claim 1, wherein the current leader node is designated randomly or pseudo-randomly from nodes that are online at current instant, from the plurality of nodes (102a, 102b, ..., 102n).

9. The method (200) according to claim 1, wherein the nodes that have determined the current status thereof being offline and are part of a same network partition, store corresponding transaction data related to one or more assets managed thereby, locally in a side chain.

10. A system (100) for writing and retrieval of data in a blockchain (102) with a plurality of nodes (102a, 102b, ..., 102n) adapted to manage multiple assets (110a, 110b, ..., 110x) and to commit blocks therein, the system (100) comprising:
one or more processing units (104a); and
a memory (104b) communicatively coupled to the one or more processing units (104a), the memory (104b) comprising a module stored in the form of machine-readable instructions executable by the one or more processing units (104a), wherein the module is configured to perform the method (200) steps as claimed in claims 1 to 9.

11. A computer-program product, having computer-readable instructions stored therein, that when executed by a processor (104a), cause the processor (104a) to perform method (200) steps according to any of the claims 1 to 9.

12. A computer readable medium on which program code sections of a computer program are saved, the program code sections being loadable into and/or executable in a system to make the system (100) execute the method (200) steps according to any of the claims 1 to 9 when the program code sections are executed in the system (110).
